# EUROPEAN PATENT APPLICATION

(11) **EP 4 026 430 A1**
(43) Date of publication of application: **13.07.2022**
(21) Application number: 20861317.4
(22) Date of filing: 02.09.2020
(51) Int. Cl.: A23F 5/40, A23L 2/52

(54) **HEAT-STERILIZED CONTAINERIZED BEVERAGE CONTAINING HIGH CONCENTRATION OF MEDIUM-CHAIN FATTY ACID TRIGLYCERIDE**

(30) Priority: 03.09.2019 JP 2019160188
(71) Applicant: Suntory Holdings Limited, Osaka 530-8203 (JP)
(72) Inventor: NONAKA, Shota, Kawasaki-shi, Kanagawa 211-0067 (JP); SOGUCHI, Akira, Kawasaki-shi, Kanagawa 211-0067 (JP); KATO, Hiroyuki, Kawasaki-shi, Kanagawa 211-0067 (JP)
(74) Representative: Vossius & Partner Patentanwälte Rechtsanwälte mbB
(86) International application number: PCT/JP2020/033213
(87) International publication number: WO 2021/045079

(57) **Abstract**

Provided is a heat-sterilized and packed beverage containing a high concentration of a medium chain triglyceride (MCT) and obtained by heat sterilization, wherein issues of poor aftertaste and throat discomfort caused by a combination of a high concentration of the MCT and heat sterilization are resolved. The heat-sterilized and packed beverage is obtained by causing 10-120 mg/100 ml of caffeine to coexist with a beverage containing 1.2-32 g/100 ml of the MCT.

## Description

### TECHNICAL FIELD

The present invention relates to a heat sterilized and packed beverage comprising a medium chain triglyceride in high concentration. In detail, the present invention relates to a heat sterilized and packed beverage in which the problem of an unpleasant aftertaste caused by heating a high concentration of medium chain triglyceride has been solved.

### BACKGROUND ART

Medium chain triglycerides are oils/fats that are found naturally in, for example, palm oil and palm kernel oil. Medium chain triglycerides are absorbed in the small intestine, then directly delivered to the liver through the portal vein, and metabolized quickly in the liver. Thus, the medium chain triglycerides are utilized as an efficient supplemental source of energy. In addition, it is known that the medium chain triglycerides are unlikely to be accumulated as body fat compared with common oils/fats composed of long chain triglycerides. For example, the medium chain triglycerides can be added to a usual diet for a dieter, a person with carbohydrate restriction, or a person with a small appetite due to advanced age or illness, to thereby favorably supplement energy.

In addition to the above, various effects of the medium chain triglycerides have been reported. For example, PTL 1 discloses use of a medium chain triglyceride (MCT) for treating a wide variety of diseases including neurological diseases, as well as conditions and diseases associated with brain energy deficiency.

As for the effects other than that in vivo, PTL 2, for example, discloses that when a medium chain triglyceride is added to a conventional milk fat-containing beverage in an amount of 0.01 to 1 % by weight based on the whole of the beverage, generation of white suspended matter derived from milk fat is prevented to stabilize milk fat in the milk-containing beverage.

### CITATION LIST

### PATENT LITERATURE

PTL 1: JP 2018-537091A
PTL 2: JP 2007-61053A

### SUMMARY OF INVENTION

### TECHNICAL PROBLEM

It is considered that it is desirable to develop a packed beverage containing a medium chain triglyceride in high concentration and having highly satisfying palatability so as to usually and easily take a medium chain triglyceride which exhibits various effects as described above. As a result of studies by the present inventors, however it has been found that when a beverage containing a medium chain triglyceride in high concentration is packed and heat sterilized, the resulting beverage leaves an unclean aftertaste, and specifically, leaves "irritating feeling," which is a feeling as if fine sand with a rough texture were swallowed, in the throat. As a result of further studies, it has been found that in a case where a beverage contains a medium chain triglyceride in low concentration (e.g., 0.5 g/100 ml), such a nasty aftertaste or unpleasant feeling in the throat does not occur even when the beverage has undergone heat sterilization. On the other hand, it has been found that in a case where a beverage has not undergone heat sterilization, almost no nasty aftertaste or unpleasant feeling in the throat occurs even when the beverage contains a medium chain triglyceride in high concentration (e.g., 2.4 g/100 ml or 10 g/100 ml). In other words, it has been found that the problems of the nasty aftertaste (unclean aftertaste) and the unpleasant feeling in the throat (irritating feeling, or bad feeling in the throat as if fine sand with a rough texture is swallowed) arise only when a beverage containing a high concentration of a medium chain triglyceride is heat sterilized and packed.

An object of the present invention is to provide a packed beverage that has overcome a nasty aftertaste and unpleasant feeling in the throat caused by the combination of a high concentration of a medium chain triglyceride with heat sterilization.

### SOLUTION TO PROBLEM

As a result of further diligent studies, the present inventors have found that when a packed beverage containing a medium chain triglyceride in high concentration is produced through heat sterilization, incorporation of a specific range of an amount of caffeine into the beverage can solve the problems of a nasty aftertaste (unclean aftertaste) and unpleasant feeling in the throat (irritating feeling).

Specifically, the present invention relates to the following.
[1] A heat sterilized and packed beverage comprising:
   1.2 g/100 ml to 32 g/100 ml of a medium chain triglyceride, and
   10 mg/100 ml to 120 mg/100 ml of caffeine.
[2] The heat sterilized and packed beverage according to [1], wherein the amount of the medium chain triglyceride is 2.4 g/100 ml to 20 g/100 ml.
[3] The heat sterilized and packed beverage according to [1] or [2], wherein a medium chain fatty acid in the medium chain triglyceride is constituted by a saturated fatty acid having 8 carbon atoms and/or a saturated fatty acid having 10 carbon atoms, and the amount of the medium chain triglyceride constituted by a saturated fatty acid having 8 carbon atoms and/or a saturated fatty acid having 10 carbon atoms is 1.2 g/ 100 ml to 32 g/ 100 ml.
[4] The heat sterilized and packed beverage according to any one of [1] to [3], wherein the heat sterilization has been performed by a method comprising heating at 85°C for 30 minutes or a method having the same or higher efficacy than the method comprising heating at 85°C for 30 minutes.
[5] The heat sterilized and packed beverage according to any one of [1] to [4], wherein the beverage includes less than 2 mass% of milk solids-not-fat.

### ADVANTAGEOUS EFFECTS OF INVENTION

The present invention provides a heat sterilized and packed beverage that contains a high concentration of a medium chain triglyceride and leaves a reduced nasty aftertaste and reduced unpleasant feeling in the throat. It is considered that such a packed beverage that contains a medium chain triglyceride in high concentration and that satisfies palatability can serve as a convenient source of medium chain triglyceride intake for a person who commonly takes it with expectation of the effects of medium chain triglycerides.

### DESCRIPTION OF EMBODIMENTS

### <Medium Chain Triglyceride>

The heat sterilized and packed beverage of the present invention comprises a medium chain triglyceride (hereinafter also abbreviate to as MCT) in high concentration. Herein, the MCT refers to a triglyceride whose constitutional fatty acid is a saturated fatty acid having 8 carbon atoms (caprylic acid) and/or a saturated fatty acid having 10 carbon atoms (capric acid). One MCT molecule may include a single kind of saturated fatty acid (for example, only the saturated fatty acid having 8 carbon atoms, or only the saturated fatty acid having 10 carbon atoms), or may include both the saturated fatty acid having 8 carbon atoms and the saturated fatty acid having 10 carbon atoms. The MCT used may be a mixture of plural kinds of such MCT molecules.

In the whole of the MCT, the ratio (mass ratio) between the saturated fatty acid having 8 carbon atoms (C8) and the saturated fatty acid having 10 carbon atoms (C10) is not particularly limited, and preferably C8:C10= 5:95 to 95:5, more preferably 40:60 to 75:25, even more preferably 50:50 to 60:40. The method for measuring the amounts of the constitutional fatty acids in the whole of the MCT will be described later.

As the MCT, a naturally occurring MCT or a MCT produced by chemical synthesis can be used. MCTs are commercially available. Commercially available MCT products (for example, a MCT oil) may contain, in addition to the MCT, a medium chain fatty acid, a medium chain diglyceride or monoglyceride, and a short chain fatty acid or a long chain glyceride, etc., as a sub-component. Such a product containing these sub-components to some extent can be used as long as the amount of the MCT defined below falls within the range according to the present invention.

The amount of the MCT in the heat sterilized and packed beverage of the present invention is 1.2 g/100 ml to 32 g/100 ml. If the amount of the MCT is less than 1.2 g/100 ml, the problems of the nasty aftertaste and unpleasant feeling in the throat, which are the problems to be solved by the present invention, may not arise in the first place even when heat sterilization is performed. On the other hand, if the amount of the MCT is more than 32 g/100 ml, the above problems may not be solved even by the present invention. For the lower limit, the amount of the MCT is more preferably 2.4 g/100 ml or more, and even more preferably 5.0 g/100 ml or more. When the amount of the MCT is 2.4 g/100 ml or more, the nasty aftertaste and unpleasant feeling in the throat generally occur strongly by heat sterilization; however, these can be significantly reduced by coexistence of caffeine in a specific amount, which will be described later. For the upper limit, the amount of the MCT is more preferably 20 g/100 ml or less. The "amount of the MCT" here refers to the amount of the triglyceride whose constitutional fatty acid is a saturated fatty acid having 8 carbon atoms (caprylic acid) and/or a saturated fatty acid having 10 carbon atoms (capric acid). The amount of the MCT in the packed beverage can be determined in the following manner: first, the packed beverage is opened and lipid is extracted from the beverage by an appropriate method; the content of triglycerides is determined according to AOCS Ce5-86; the amount of each fatty acid is determined according to AOCS Ce1f-96; and from these values, the amount of the triglyceride whose constitutional fatty acid is a saturated fatty acid having 8 carbon atoms (caprylic acid) and/or a saturated fatty acid having 10 carbon atoms (capric acid) is calculated.

### <Caffeine>

The heat sterilized and packed beverage of the present invention comprises caffeine in addition to the MCT in the above described concentration, whereby the nasty aftertaste (unclean aftertaste) and the unpleasant feeling in the throat (irritating feeling in the throat as if fine sand with a rough texture is swallowed) caused by the combination of a medium chain triglyceride in high concentration with heat sterilization can be reduced, and thus a heat sterilized beverage that can be favorably drunk can be provided. The caffeine concentration in the heat sterilized and packed beverage of the present invention is 10 mg/100 ml to 120 mg/100 ml. If the caffeine concentration is less than 10 mg/100 ml, the problems of the nasty aftertaste and the unpleasant feeling in the throat caused by heat sterilization of a beverage containing a MCT in high concentration may not be solved. On the other hand, if the caffeine concentration is more than 120 mg/100 ml, an aftertaste from caffeine itself may be strong, which results in a beverage unsuitable for drinking. For the lower limit, the caffeine concentration is more preferably 20 mg/100 ml or more, and even more preferably 30 mg/100 ml or more. A caffeine concentration of 20 mg/100 ml or more can further enhance the effect on reducing nasty aftertaste and unpleasant feeling in the throat of the heat sterilized and packed beverage containing the MCT in high concentration, and a caffeine concentration of 30 mg/100 ml or more can more highly enhance such an effect. For the upper limit, the caffeine concentration is more preferably 90 mg/100 ml or less, and even more preferably 80 mg/100 ml or less. Within such a range, the strong aftertaste from caffeine itself is unlikely to affect the beverage.

The content of caffeine in the heat sterilized and packed beverage can be determined by a method using high performance liquid chromatography (HPLC).

The caffeine used in the present invention is not particularly limited, and the caffeine may be a commercially available reagent, a pure form (purified product with a caffeine content of 98 mass% or more), or a roughly purified product (with a caffeine content of 50 to 98 mass%), or may be used in the form of an extract from a plant containing caffeine (e.g., coffee beans, tea leaves, or cola nuts) or a concentrate thereof. For the case where the caffeine is used in the form of an extract from a plant or a concentrate thereof, examples of materials to be subjected to extraction include, but not limited to, coffee beans from the Rubiaceae family, the Coffea genus; and tea leaves from Camellia sinensis, including green tea, black tea, oolong tea, and puer tea.

### <Heat Sterilized and Packed Beverage>

The present invention solves the problems of a nasty aftertaste (unclean aftertaste) and unpleasant feeling in the throat (irritating feeling) caused by the combination of a MCT in high concentration with heat sterilization. The beverage of the present invention is one that has undergone both heat sterilization and packing ("heat sterilized and packed beverage"). For the "heat sterilized and packed beverage", the order of the heat sterilization and the packing is not particularly limited, and these may be carried out in an ordinary manner for producing a packed beverage. For example, when making a canned beverage, a predetermined amount of a formulated liquid may be filled in a can, followed by retort sterilization. When making a beverage in a plastic bottle, a paper pack, a cup, or a bottle, UHT sterilization or the like may be carried out, followed by hot-packing or aseptic packing at a low temperature.

Herein, "heat sterilization" refers to a method including heating at 85°C for 30 minutes or a method having the same or higher efficacy than it. More preferably, the heat sterilization is a method including heating at 120°C for 4 minutes or a method having the same or higher efficacy than it. A method for calculating the temperature and time for "the same or higher efficacy" is described in "Handbook of administrative plan for hygiene control in production of soft drink; November, 2018; Japan Soft Drink Association."

The type of the container for packing the beverage of the present invention is not particularly limited and, for example, may be a container commonly used, including an aluminum can, a steel can, a plastic bottle, a glass bottle, a paper container, and a cup. After the beverage of the present invention is filled in such a container, the container is closed.

### <Others>

In addition, the beverage of the present invention may contain various additives as in common beverages, including a seasoning such as a sweetener, a vitamin, a coloring agent, an antioxidant, an emulsifier, a stabilizer, a preservative, a pH regulator, and a quality stabilizer, as long as these do not impair the effect of the present invention. The beverage of the present invention may also contain coffee extract, tea extract, carbon dioxide, fruit juice, milk or milk products, alcohol, or others, according to the kind of the beverage. However, if a large amount of solids derived from milk, particularly milk solids-not-fat (e.g., skimmed milk powder) is included in the beverage, such solids by itself masks irritating feeling from a heated MCT, and thus the problem to be solved by the present invention may not arise in the first place. Accordingly, the content of milk solids-not-fat in the heat sterilized and packed beverage of the present invention is preferably less than 2 mass%, and the beverage of the present invention is more preferably free from milk solids-not-fat. Herein, milk solids-not-fat refers to residual components (derived from milk) when water and milk fat are removed from milk. The content of skimmed milk powder in the heat sterilized and packed beverage of the present invention is preferably less than 2 mass%, and the beverage of the present invention is more preferably free from skimmed milk powder.

The kind of the beverage of the present invention is not particularly limited. Examples thereof include a coffee beverage, a tea beverage, an energy drink, a carbonated beverage, a cocoa beverage, a fruit beverage, a sports drink, a milk beverage, and an alcoholic beverage. Among these, a coffee beverage and a tea beverage are particularly preferable modes. Herein "a coffee beverage" refers to a beverage containing extract from roasted coffee beans, and "a tea beverage" refers to a beverage containing extract from tea leaf or extract from cereals as the main ingredient.

### <Method>

In another aspect, the present invention relates to a method for producing a beverage, and specifically, a method for producing a beverage containing a MCT in high concentration and caffeine in an amount within a specific range, the beverage being obtained by carrying out heat sterilization and packing. The method includes:
the step of adding a medium chain triglyceride to a beverage in an amount of 1.2 g/100 ml to 32 g/100 ml,
the step of adjusting the caffeine concentration in the beverage to 10 mg/100 ml to 120 mg/100 ml,
the step of heat sterilizing the resulting beverage, and
the step of packing the resulting beverage.

The caffeine concentration in the beverage can be adjusted by adding a caffeine preparation or an extract from a plant containing caffeine as described above to the beverage, or by removing caffeine from the beverage using a known technique (decaffeination), if needed. Either the step of adding a MCT or the step of adjusting the caffeine concentration may be carried out first, or the two steps may be carried out simultaneously. The heat sterilizing step and the packing step are carried out after the step of adding a MCT and the step of adjusting the caffeine concentration are completed. Either the heat sterilizing step or the packing step may be carried out first, or the two steps may be carried out simultaneously.

The heat sterilized and packed beverage obtained by the production method described above leaves reduced nasty aftertaste (unclean aftertaste) and reduced unpleasant feeling in the throat (irritating feeling in the throat as if fine sand with a rough texture is swallowed), which are derived from the MCT and are caused by the combination of a MCT in high concentration with heat sterilization. Accordingly, in another aspect, it can be said that the production method is a method for reducing the nasty aftertaste and the unpleasant feeling in the throat left by a heat sterilized and packed beverage containing a MCT in high concentration, which are caused by the combination of the MCT in high concentration with heat sterilization.

### EXAMPLES

The present invention will be specifically described in detail below by illustrating Experimental Examples, but the present invention is not limited thereto.

### <Reference Examples>

A MCT (manufactured by The Nisshin OilliO Group, Ltd.; product name: Sukore (registered trademark) 64G; composition of fatty acids: C8 fatty acid 60 mass%, C10 fatty acid 40 mass%) was added to a commercially available decaffeinated coffee (caffeine content 5 mg/100 ml) to the concentration shown in Table 1 below. In Reference Example 1, the resultant was packed in a can and then heat sterilized at 125°C for 5 minutes, and in Reference Examples 2 and 3, the resultant was packed in a can but not then heat sterilized. The obtained beverages were each stored at 5°C and opened the next day. Three trained and specializing panelists drank the beverages to evaluate "nasty aftertaste and unpleasant feeling in the throat" on the following evaluation scale. The "nasty aftertaste" means that "a clean aftertaste is not left, or an unfavorable aftertaste is remained after swallowing," and the "unpleasant feeling in the throat" specifically means "irritating feeling in the throat as if fine sand with a rough texture is swallowed." Before the evaluation, the standards for giving the scores among the panelists were aligned with each other, for the nasty aftertaste and the unpleasant feeling in the throat. The average of the evaluation scores given by the three panelists is shown in Table 1. A beverage given an average score of 3.0 or more creates no unpleasant feeling in the throat, and is thus acceptable as a beverage. As a result of the evaluation, there was almost no variation in the evaluation scores among the panelists. Exemplary comments of the panelists are also shown in Table 1.

### - Evaluation scale

4 points: a clean aftertaste without unpleasant feeling in the throat
3 points: a slightly less clean aftertaste without unpleasant feeling in the throat
2 points: a less clean aftertaste with unpleasant feeling in the throat
1 point: a nasty aftertaste with much unpleasant feeling in the throat

**[Table 1]**

| | **Heat Sterilization** | **Amount of MCT** (g/100ml) | **Amount of caffeine** (mg/100ml) | **Average Scored of Evaluation** | **Comment** |
|---|---|---|---|---|---|
| **Reference Example 1** | **Yes** | 0.5 | 5 | 4.0 | **Palatable** |
| **Reference Example 2** | **No** | 2.4 | 5 | 3.7 | **Palatable** |
| **Reference Example 3** | **No** | 10 | 5 | 3.0 | **Palatable with no problem, but with rather slightly clean aftertaste.** |

It can be seen from the results in Table 1 that the beverage containing a MCT in an amount of 0.5 g/100 ml is palatable with almost no nasty aftertaste or unpleasant feeling in the throat even when the beverage has undergone heat sterilization (Reference Example 1). On the other hand, it can be seen that the beverage containing a MCT in high concentration, specifically, 2.4 g/100 ml or 10 g/100 ml, is similarly palatable with no problem when the beverage has undergone no heat sterilization (Reference Examples 2 and 3).

### <Examples and Comparative Examples>

A MCT (manufactured by The Nisshin OilliO Group, Ltd.; product name: Sukore (registered trademark) 64G) and caffeine (manufactured by SHIRATORI Pharmaceutical Co., Ltd.) were added to a commercially available decaffeinated coffee (caffeine content 5 mg/100 ml) to the respective concentrations shown in Table 2 below. The resultant was packed in a can and then heat sterilized at 125°C for 5 minutes to obtain beverages. The obtained beverages were stored at 5°C and opened the next day. In the same manner as in Reference Examples, three specializing panelists evaluated "nasty aftertaste and unpleasant feeling in the throat." The average scores and exemplary comments of the panelists are shown in Table 2.

**[Table 2]**

| | **Heat Sterilization** | **Amount of MCT** (g/10ml) | **Amount of caffeine** (mg/100ml) | **Average Score of Evaluation:** | **Comment** |
|---|---|---|---|---|---|
| **Comparative Example 1** | **Yes** | 1.2 | 5 | 2.0 : | **Unacceptable because of a slightly clean aftertaste with the problem of unpleasant feeling in the throat.** |
| **Example 1** | **Yes** | 1.2 | 12 | 3.0 | **Acceptable because of no unpleasant feeling in the throat, but with a slightly clean aftertaste.** |
| **Example 2** | **Yes** | 1.2 | 115 | 3.0 | **Acceptable because of no unpleasant feeling in the throat, but with a slightly clean aftertaste.** |
| **Comparative Example 2** | **Yes** | 2.4 | 5 | 1.3 | **Unacceptable because of no clean aftertaste and also strong unpleasant feeling in the throat.** |
| **Example 3** | **Yes** | 2.4 | 30 | 4.0 | **Palatable because of clean aftertaste and no unpleasant feeling.** |
| **Example 4** | **Yes** | 2.4 | 90 | 4.0 | **Palatable because of clean aftertaste and no unpleasant feeling.** |
| **Comparative Example 3** | **Yes** | 10 | 5 | 1.0 | **Unacceptable because of no clean aftertaste and also strong unpleasant feeling in the throat.** |
| **Comparative Example 4** | **Yes** | 10 | 150 | 1.0 | **Unacceptable because of too strong aftertaste derived from caffeine and also strong unpleasant feeling in the throat.** |
| **Example 5** | **Yes** | 20 | 30 | 4,0 | **Palatable because of clean aftertaste and no unpleasant feeling.** |
| **Example 6** | **Yes** | 20 | 90 | 4.0 | **Palatable because of clean aftertaste and no unpleasant feeling.** |
| **Example 7** | **Yes** | 32 | 12 | 3,0 : | **Acceptable because of no unpleasant feeling in the throat, but with a slightly clean aftertaste.** |
| **Example 8** | **Yes** | 32 | 115 | 3 .0 : | **Acceptable because of no unpleasant feeling in the throat, but with a slightly clean aftertaste.** |

It can be seen from the results in Table 2 that the beverage containing a MCT in an amount within a range of 1.2 g/100 ml to 32 g/100 ml and caffeine in an amount within a range of 10 mg/100 ml to 120 mg/100 ml is palatable with little nasty aftertaste or unpleasant feeling in the throat even when the beverage has undergone heat sterilization (Examples 1 to 8). On the other hand, it can be seen that the beverage containing a MCT in an amount within the above-described range and caffeine in an amount less than 10 mg/100 ml leaves a nasty aftertaste and unpleasant feeling in the throat (Comparative Examples 1 to 3), and that the beverage containing a MCT in an amount within the above-described range and caffeine in an amount of 150 mg/100 ml leaves a nasty aftertaste and strong unpleasant feeling in the throat (Comparative Example 4).

## Claims

1. A heat sterilized and packed beverage comprising:
1.2 g/100 ml to 32 g/100 ml of a medium chain triglyceride, and
10 mg/100 ml to 120 mg/100 ml of caffeine.

2. The heat sterilized and packed beverage according to claim 1, wherein the amount of the medium chain triglyceride is 2.4 g/100 ml to 20 g/100 ml.

3. The heat sterilized and packed beverage according to claim 1 or 2, wherein a medium chain fatty acid in the medium chain triglyceride is a saturated fatty acid having 8 carbon atoms and/or a saturated fatty acid having 10 carbon atoms.

4. The heat sterilized and packed beverage according to any one of claims 1 to 3, wherein the heat sterilization has been performed by a method comprising heating at 85°C for 30 minutes or a method having the same or higher efficacy than the method comprising heating at 85°C for 30 minutes.

5. The heat sterilized and packed beverage according to any one of claims 1 to 4, wherein the beverage includes less than 2 mass% of milk solids-not-fat.
